Europäisches Patentamt

European Patent Office

Office européen des brevets

(11) Numéro de publication: **0 323 357**
**A1**

## (12) DEMANDE DE BREVET EUROPEEN

(21) Numéro de dépôt: **88403357.2**

(22) Date de dépôt: **29.12.88**

(51) Int. Cl.⁴: **G 01 K 13/06**
**G 01 K 1/16**

---

(30) Priorité: **31.12.87 FR 8718493**

(43) Date de publication de la demande:
**05.07.89 Bulletin 89/27**

(84) Etats contractants désignés:
**AT BE CH DE ES FR GB GR IT LI LU NL SE**

(71) Demandeur: **BERTIN & CIE**
**Zone Industrielle Boîte postale 3**
**F-78373 Plaisir Cédex (FR)**

(72) Inventeur: **Roth, Bernard**
**10 A, Rue de la Procession**
**F-75015 Paris (FR)**

**Wintrebert, Gilles**
**5 Villa Robert Lindet**
**F-75015 Paris (FR)**

**Delikat, Catherine**
**54 rue de l'Aqueduc**
**F-75010 Paris (FR)**

(74) Mandataire: **Ramey, Daniel et al**
**Cabinet Ores 6 Avenue de Messine**
**F-75008 Paris (FR)**

---

(54) **Procédé et dispositif de mesure instantanée de la température d'un élément par mesure de la température d'un débit fluide entraîné au contact de cet élément.**

㊼ L'invention concerne la mesure instantanée de la température d'un élément (10), sans contact thermique, par mesure de la température d'un débit de fluide à l'entrée d'une zone de mesure et à la sortie de cette zone de mesure, et de la température d'une paroi (12) délimitant la zone de mesure. Des thermocouples (28,32) permettent de reveler ces température et de les transmettre à un circuit (34) de traitement de l'information.

L'invention s'applique notamment à la mesure de température sans contact.

EP 0 323 357 A1

**Description**

## PROCEDE ET DISPOSITIF DE MESURE INSTANTANEE DE LA TEMPERATURE D'UN ELEMENT PAR MESURE DE LA TEMPERATURE D'UN DEBIT DE FLUIDE ENTRAINE AU CONTACT DE CET ELEMENT

L'invention concerne un procédé et un dispositif de mesure instantanée de la température d'un élément, par mesure de la température d'un débit de fluide entraîné au contact de cet élément.

L'invention est en particulier, mais non exclusivement, applicable à la mesure sans contact de la température d'un élément, qui peut être immobile, ou en déplacement continu ou discontinu.

On connaît déjà des moyens de mesure, sans contact, de température d'un élément par mesure du rayonnement infrarouge. Toutefois, ces moyens connus ne fonctionnent pas correctement avec des éléments tels que l'aluminium, qui ont des propriétés radiatives inhabituelles.

On a déjà proposé, pour s'affranchir de ces inconvénients, des moyens de mesure sans contact d'une température, utilisant un débit de fluide qui s'écoule au contact de l'élément et dont on mesure la température pour en déduire celle de l'élément. En particulier, on a déjà proposé de guider ce débit de fluide au contact d'un élément par une paroi qui définit une zone d'écoulement du fluide, et de déterminer la témperature de l'élément à partir des températures du fluide à l'entrée à la sortie de cette zone. Cette technique antérieure suppose que l'appareil de mesure ait atteint une température d'équilibre ne risquant pas d'influencer la température du fluide, ce qui interdit de faire des mesures instantanées ou en continu de la température de l'élément en question.

On a également proposé des procédés de ce type, utilisant une méthode de zéro. Pour cela, le fluide, ou bien l'appareil de mesure, doit être chauffé par un élément chauffant commandé par des thermocouples montés en opposi tion, la mesure de la température de l'élément ne pouvant avoir lieu que lorsque toutes les températures mesurées sont à la même valeur, qui est supposée être alors celle de l'élément. Cette technique interdit donc elle aussi des mesures instantanées ou en continu de la température d'un élément.

On connaît également, par le brevet U.S. n° 4 501 504, un procédé de mesure en continu de la température d'un élément, cette température étant déduite de la température du fluide en sortie de l'appareil et de la mesure d'une température de paroi de l'appareil, en fonction de l'hypothèse simpliste selon laquelle la température de l'air à la sortie de l'appareil est égale à la moyenne arithmétique de la température de l'élément et de la température de l'appareil. En pratique, il est impossible, par ce procédé, de déterminer avec précision et de façon instantanée ou continue la température d'un élément, les erreurs de mesure pouvant être de l'ordre de 50 à 100 % selon les cas.

On connaît aussi par le brevet G.B. 1 552 793 un procédé de mesure de la température d'un élément allongé tel qu'un fil ou une tige d'aluminium, qui consiste à faire défiler l'élément dans une chambre traversée par un débit d'air, à mesurer les températures de l'air à l'entrée et à la sortie de la chambre, et à en déduire la valeur de la température de l'élément. De préférence, la température de l'air à l'entrée de la chambre est régulée pour être égale à une température nominale souhaitée de l'élément. Il est prévu également de mesurer la température de la chambre, de corriger par calcul la valeur obtenue de la température de l'élément quand la température de la chambre varie faiblement, et de commander un moyen de chauffage/refroidissement pour rendre cette température constante lorsqu'elle aurait tendance à varier largement.

Ce procédé connu est donc essentiellement du type à méthode de zéro, où l'on cherche à mesurer la tempé rature de l'élément à partir de la température de sortie de l'air, tous les autres paramètres étant de préférence maintenus invariants. En particulier, il ne permet pas une mesure instantanée précise d'une variation de température de l'élément. Il n'est pas non plus applicable à des éléments plans tels que bandes, feuilles, etc.

L'invention a précisément pour but d'éviter ces inconvénients de la technique antérieure, grâce à un procédé et un dispositif permettant de mesurer de façon précise, instantanée ou en continu la température d'un élément et les variations de cette température.

L'invention propose à cet effet un procédé de mesure instantanée de la température d'un élément par mesure de la température d'un débit de fluide entraîné en contact de l'élément, consistant à guider le débit de fluide par une paroi définissant une zone d'écoulement du fluide au contact de l'élément, caractérisé en ce qu'il consiste à déterminer le débit et la pression du fluide ainsi que la distance entre ladite paroi et l'élément, et à mesurer les températures de la surface de la paroi en contact avec le fluide, et du fluide à l'entrée et à la sortie de ladite zone, ainsi que les variations de ces températures, pour en déduire une valeur instantanée précise de la température de l'élément.

L'invention est basée sur le fait que, dans des conditions connues de distance, de débit et de pression du fluide, il suffit de mesurer les températures du fluide à l'entrée et à la sortie de la zone de mesure et la température de paroi de l'appareil de mesure pour en déduire de façon instantanée et précise la température de l'élément.

Elle prévoit également de déterminer au préalable les lois de variation dynamique des températures du fluide et de ladite paroi, et de les utiliser pour déterminer en temps réel les variations de température de l'élément à partir des températures mesurées du fluide et de la paroi.

Avantageusement, le procédé consiste également à rendre sensiblement uniforme la température de la surface de paroi en contact avec le fluide sur sensiblement toute l'étendue de cette surface.

La détermination de la température de l'élément à partir des températures du fluide et de la température de la surface de la paroi en est simplifiée, et il suffit de mesurer la température de la surface de la paroi en un point de celle-ci.

Selon une autre caractéristique de l'invention, le procédé consiste également à isoler thermiquement ladite surface de paroi de l'environnement extérieur.

De cette façon, on soustrait la surface sensible de l'appareil de mesure aux variations de l'environnement extérieur, et on augmente la différence entre la température de cette surface de paroi et la température de l'air à l'entrée de la zone de mesure, et donc la précision de mesure.

Selon une forme de réalisation avantageuse de l'invention, le procédé consiste à maintenir constante la distance entre ladite surface de paroi et l'élément au moyen d'un coussin d'air.

Une partie du débit de fluide alimentant ce coussin d'air peut former le débit de fluide de mesure de la température de l'element. Par ailleurs, l'action du coussin d'air sur l'élément peut permettre, dans certaines conditions, de nettoyer la surface de cet élément. Enfin, la pression du fluide de mesure dans le coussin d'air est nécessairement constante.

En variante, le procédé consiste à définir une distance constante entre la paroi et l'élément par des moyens mécaniques de support de la paroi et à contrôler la valeur de cette distance au moyen d'un capteur de proximité, ou bien à définir une valeur constante de cette distance par des moyens d'appui local de la paroi sur l'élément.

L'invention propose également un dispositif de mesure instantanée de la température d'un élément, en particulier par exécution du procédé qui vient d'être décrit, ce dispositif comprenant une paroi définissant une zone d'écoulement de fluide en contact avec l'élément et des moyens de mesure de la température du fluide, caractérisé en ce qu'il comprend des moyens de commande de la pression et du débit de fluide en contact avec l'élément, des moyens de mesure de la température de la surface de ladite paroi orientée vers l'élément, des moyens de mesure de la température du fluide à l'entrée et à la sortie de ladite zone et des moyens de traitement de l'information pour calculer la température de l'élément à partir des température mesurées de la surface de paroi et du fluide, des variations de ces températures et des lois connues de variation dynamique de ces températures.

Avantageusement, la paroi est réalisée en matière bonne conductrice de la chaleur, ce qui lui permet d'être sensiblement isotherme.

Elle est de préférence isolée de l'environnement extérieur par un revêtement de matière thermiquement isolante.

Selon un mode de réalisation préféré de l'invention, cette paroi est entourée par un conduit périphérique alimenté par un débit d'air et pourvu d'orifices orientés vers l'élément pour former un coussin d'air de sustentation de la paroi sur l'élément, cette paroi comprenant un orifice central de sortie d'une fraction du débit d'air formant le coussin d'air.

Le restant du débit d'air s'échappe vers l'extérieur à la périphérie du dispositif en isolent ainsi la zone de mesure des influences extérieures.

Avantageusement, l'orifice central de la paroi est relié à des moyens d'aspiration d'air. L'écoulement d'air au contact de l'élément est ainsi plus stable.

En variante, la paroi est supportée par des moyens mécaniques extérieurs à distance sensiblement constante de l'élément et est associée à un capteur de proximité permettant de contrôler cette distance.

Selon une autre forme de réalisation, la paroi est associée à des moyens d'appui local sur l'élément, ces moyens n'ayant aucune influence sur la mesure.

De façon générale, l'invention est applicable à la mesure instantanée et précise de la température des éléments les plus divers, tels que des éléments longilignes ou filiformes, ou en forme de bandes ou de plaques, qui sont en défilement continu ou discontinu, ou bien qui sont immobiles.

L'invention sera mieux comprise et d'autres détails, caractéristiques et avantages de celle-ci apparaîtront plus clairement à la lecture de la description qui va suivre, faite à titre d'exemple en référence aux dessins annexés, dans lesquels :

la figure 1 est une vue schématique en coupe axiale d'une première forme de réalisation du dispositif selon l'invention ;

les figures 2 et 3 sont des vues schématiques de variantes de réalisation de ce dispositif.

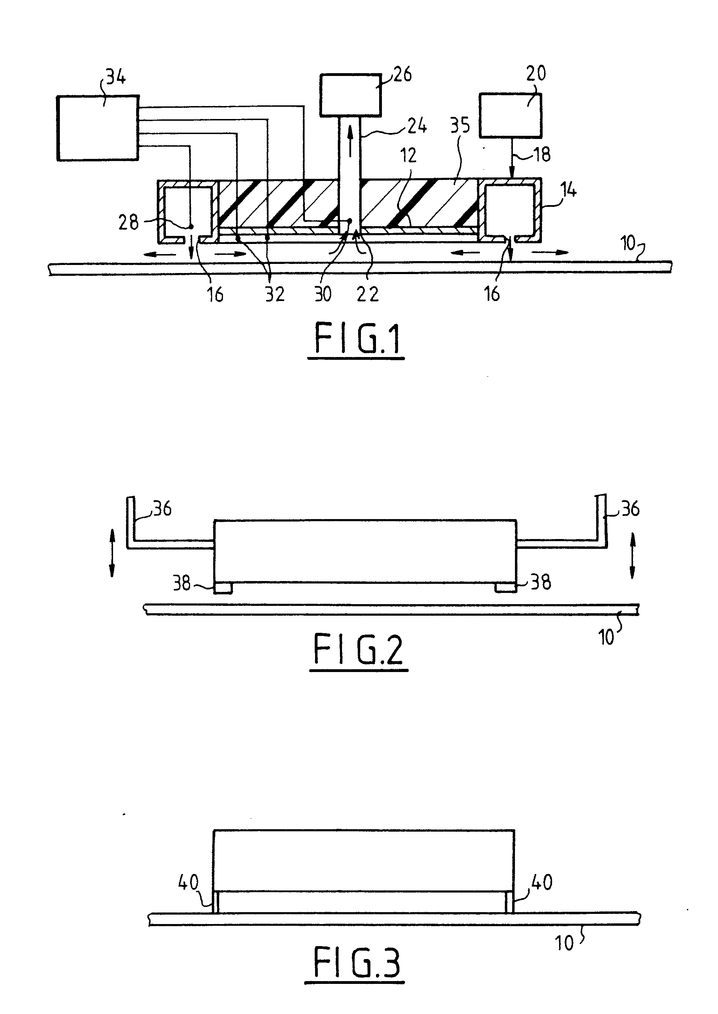

On se réfère d'abord à la figure 1, représentant schématiquement une première forme de réalisation d'un dispositif selon l'invention, appliqué à la mesure de la température d'un élément tel par exemple qu'une feuille ou plaque métallique 10 en défilement continu.

Le dispositif est placé qu-dessus de l'élément 10 et comprend une plaque plane 12 de matière bonne conductrice de la chaleur, de forme par exemple circulaire et solidaire à sa périphérie d'un conduit annulaire 14 comprenant des trous 16 régulièrement répartis, orientée vers l'élément 10. Le conduit annulaire 14 est alimenté par un débit 18 sensiblement constant d'air à pression déterminée grâce à des moyens 20 de contrôle de débit et de pression. Ce débit d'air sortant par les orifices 16 forme entre l'élément 10 et le dispositif un coussin d'air permettant la sustentation du dispositif. Une partie du débit d'air s'échappe vers l'extérieur, comme indiqué par la flèche, tandis qu'une autre partie du débit d'air circule radialement vers un orifice central 22 de la plaque 12 relié par un conduit 24 à des moyens 26 d'aspiration d'air, permettant de contrôler le débit d'air circulant entre l'élément 10 et la plaque 12 et de réduire les perturbations de l'écoulement.

Des moyens de mesure de température, tels que des thermocouples, sont prévus dans le dispositif comme

3

indiqué en 28 pour la mesure de la température de l'air à l'entrée de la zone de mesure, en 30 pour la mesure de l'air à la sortie de cette zone, et en 32 pour la mesure de la température de la surface de la paroi 12 orientée vers l'élément 10. Les termocouples sont reliés à des moyens 34 de traitement de l'information, permettant de calculer la température de l'élément 10 à partir des signaux fournis par les termocouples.

Avantageusement, une couche 35 de matière thermiquement isolante recouvre la face extérieure de la plaque 12.

Ce dispositif est utilisé de la façon suivante.

Le dispositif est placé au-dessus de l'élément 10 dont on veut mesurer la température et est supporté, à distance sensiblement constante de cet élément, par le coussin d'air formé entre le conduit annulaire 14 et l'élément 10. Une partie du débit d'air formant ce coussin de sustentation s'échappe à l'extérieur, avec une vitesse supérieure à la vitesse relative entre le dispositif et l'élément 10, l'autre partie circule radialement entre l'élément 10 et la plaque 12 en direction de l'orifice central 22, du conduit 24 et des moyens d'aspiration 26.

Les jets d'air sortant des orifices 16 du conduit 14 viennent frapper la surface de l'élément 10, ce qui favorise l'échange thermique entre l'air et l'élément. Par ailleurs, la partie du débit d'air qui s'échappe vers l'extérieur du conduit annulaire 14 protège des influences extérieures la partie du débit d'air qui circule entre la plaque 12 et l'élément 10 vers l'orifice central 22. De plus, lorsque le dispositif selon l'invention et l'élément 10 sont mobiles l'un par rapport à l'autre, le coussin d'air de sustentation peut servir, dans certaines conditions appropriées de débit et de pression, à nettoyer la surface de l'élément 10. Il a également pour effet d'assurer la constance de la pression d'air sous la plaque 12.

De préférence, le débit d'air circulant entre l'élément 10 et la plaque 12 est réglé à une valeur relativement faible pour augmenter la variation de température de l'air au contact de l'élément 10, et donc améliorer la précision de mesure. En pratique, ce débit est réglé à une valeur optimale assurant, d'une part, une bonne précision de mesure, et, d'autre part, une bonne stabilité de l'écoulement. L'isolation thermique 35 de la plaque 12 permet également, en diminuant l'influence des conditions extérieures sur le débit d'air, d'augmenter la réponse en température de ce dernier au contact de l'élément 10.

La plaque 12 est de préférence aussi isotherme que possible, et pour cela réalisée en matériau bon conducteur de la chaleur, avec une épaisseur suffisante, pour que le ou les points de mesure 32 reflètent avec précision la température de la plaque 12.

Dans ces conditions, la température de l'élément 10 peut être calculée à partir des valeurs de température de l'air à l'entrée et à la sortie de la zone de mesure et de la température de la paroi 12 du dispositif, les signaux fournis par les thermocouples 28,30,32 étant numérisés, puis traités par le circuit 34.

La température de l'air en sortie de la zone de mesure est donnée, en fonction de la température de l'élément 10, de la température de la plaque 12 et de la température de l'air à l'entrée de la zone de mesure, par la relation suivante :

$$Ts = E \frac{h1S1T1 + h2S2T2}{h1S1 + h2S2} + (1 - E)Te$$

où Ts est la température de sortie de l'air, Te sa température à l'entrée de la zone de mesure, T1 est la température de la plaque 12 dont la surface en contact avec l'air de mesure est S1, T2 est la température de l'élément 10, dont la surface en contact avec l'air de mesure est S2, hl et h2 sont les coefficients d'échange de la plaque 12 et de l'élément 10 respectivement, et E est l'efficacité thermique de l'échange de chaleur entre l'élément 10, la plaque 12 et le débit d'air.

L'efficacité thermique E dépend essentiellement du débit et de la pression de l'air de mesure, et de la distance entre la plaque 12 et l'élément 10. Lorsque ces paramètres sont fixés et pour une certaine plage de température, la relation entre les diverses températures est sensiblement linéaire. Il est donc relativement simple, dans des conditions données, de déterminer la température de l'élément 10 à partir des température de l'écoulement d'air à l'entrée et à la sortie de la zone de mesure et de la température de la plaque 12 du dispositif.

Lorsque la température de l'élément 10 varie brusquement ou rapidement, il ne suffit pas de tenir compte des valeurs des températures de l'air à l'entrée et à la sortie de la zone de mesure, et de la température de la paroi 12, qui ne varient plus en concordance. Il faut alors mesurer leurs variations instantanées, correspondant à leurs lois respectives de variation dynamique. L'invention prévoit donc de déterminer ces lois au préalable et de les utiliser en cas d'écarts entre les variations instantanées des températures mesurées d'air et de paroi, pour reconstituer en temps réel les modifications brusques de la température de l'élément 10 qui sont la cause des écarts préci tés. On peut ainsi connaître avec précision les variations transitoires de la température de l'élément 10.

On remarquera que la plaque 12 se trouve légèrement au-dessus du fond du conduit 14 et définit ainsi une chambre de formation du coussin d'air, ce qui a également pour effet d'augmenter la distance entre la plaque 12 et l'élément 10, et de réduire les variations de température de la plaque 12 en fonction des variations de cette distance (l'élément 10 n'étant ni parfaitement plan, ni à température constante quand il défile sous la plaque 12).

Dans la forme de réalisation qui est représentée en figure 1, le dispositif de mesure peut de déplacer au-dessus de l'élément 10 qui est fixe, ou bien l'élément 10 peut défiler par rapport au dispositif de mesure qui est fixe.

Dans le cas où le dispositif est fixe, on peut, comme représente très schématiquement en figure 2, le supporter par des moyens mécaniques extérieurs 36 permettant de régler sa distance par rapport à l'élément 10, un ou plusieurs capteurs de proximité 38 étant associés au dispositif pour contrôler la valeur de cette distance.

Lorsque l'élément 10 est immobile, ou bien lorsque son mouvement est relativement lent, le dispositif de mesure selon l'invention peut être posé sur l'élément 10, de façon temporaire, et comprend alors des moyens 40 d'appui local sur l'élément 10 qui sont conçus de façon à ne pas perturber la mesure, c'est-à-dire essentiellement ne pas perturber l'écoulement du fluide de mesure.

De façon générale, l'invention permet de mesurer la température de surface d'un corps solide, sans avoir de contact thermique avec ce corps, sans être influencé par les propriétés thermo-optiques du corps, sans exercer de perturbations sur le corps lui-même, la mesure étant simple, précise, rapide et pouvant être réalisée en continu.

Par ailleurs, le dispositif selon l'invention peut avoir une géométrie adaptée à celle de la surface dont on veut mesurer la température, dans le cas où cette surface n'est pas plane.

**Revendications**

1) Procédé de mesure instantanée de la température d'un élément par mesure de la température d'un débit de fluide entraîné au contact de cet élément, consistant à guider le débit de fluide par une paroi (12) définissant une zone d'écoulement du fluide au contact de l'élément (10), caractérisé en ce qu'il consiste à déterminer le débit et la pression du fluide, ainsi que la distance entre ladite paroi (12) et l'élément (10), et à mesurer les températures de la surface de la paroi (12) en contact avec le fluide et du fluide à l'entrée et à la sortie de ladite zone, ainsi que les variations de ces températures, pour en déduire une valeur instantanée précise de la température de l'élément (10).

2) Procédé selon la revendication 1, caractérisé en ce qu'il consiste à déterminer au préalable les lois de variation dynamique des températures du fluide et de la paroi (12), et à les utiliser pour déterminer en temps réel les variations de température de l'élément à partir des températures mesurées du fluide et de la paroi (12).

3) Procédé selon la revendication 1 ou 2, caractérisé en ce qu'il consiste à maintenir constantes les valeurs du débit et de la pression du fluide, et de la distance entre la paroi (12) et l'élément (10).

4) Procédé selon une des revendications 1 à 3, caractérisé en ce qu'il consiste à rendre sensiblement uniforme la température de la surface de la paroi (12) en contact avec le fluide, sur sensiblement toute l'étendue de cette surface, et à isoler thermiquement ladite surface de la paroi (12) de l'environnement extérieur.

5) Procédé selon l'une des revendications précédentes, caractérisé en ce qu'il consiste à maintenir constante la distance entre ladite surface de paroi (12) et l'élément (10) au moyen d'un coussin d'air.

6) Procédé selon la revendication 5, caractérisé en ce qu'il consiste à utiliser une partie du débit alimentant le coussin d'air pour former le débit de fluide de mesure de la température de l'élément (10).

7) Procédé selon la revendication 5 ou 6, caractérisé en ce qu'il consiste à nettoyer la surface de l'élément (10) au moyen du coussin d'air précité.

8) Procédé selon l'une des revendications 1 à 4, caractérisé en ce qu'il consiste à définir une distance constante entre la paroi (12) et l'élément (10) par des moyens mécaniques (36) de support de la paroi et à contrôler la valeur de cette distance au moyen d'un capteur de proximité (38).

9) Procédé selon l'une des revendications 1 à 4, caractérisé en ce qu'il consiste à définir une distance constante entre la paroi (12) et l'élément (10) par des moyens (40) d'appui local sur la paroi sur l'élément.

10) Dispositif de mesure instantanée de la température d'un élément, en particulier par exécution du procédé selon l'une des revendications précédentes, comprenant une paroi définissant une zone d'écoulement de fluide en contact avec l'élément et des moyens de mesure de la température du fluide, caractérisé en ce qu'il comprend des moyens (20) de commande de la pression et du débit du fluide en contact avec l'élément (10), des moyens (32) de mesure de la température de la surface de la paroi (12) orientée vers l'élément (10), des moyens (28,30) de mesure des températures du fluide à l'entrée et à la sortie de ladite zone, et des moyens (34) de traitement de l'information pour calculer la témperature de l'élément (10) à partir des températures mesurées de la surface de paroi (12) et du fluide, des variations de ces températures et des lois connues de variation dynamique de ces températures.

11) Dispositif selon la revendication 10, caractérisé en ce que la paroi (12) est réalisée en matière bonne conductrice de la chaleur et est isolée de l'environnement extérieur par un revêtement (35) de matière thermiquement isolante.

12) Dispositif selon la revendication 10, caractérisé en ce que ladite paroi (12) est entourée par un conduit périphérique (14) alimenté par un débit d'air et pourvu d'orifices (16) orientés vers l'élément (10)

5

pour former un coussin d'air de sustentation de la paroi (12) sur l'élément, cette paroi comprenant un orifice central (22) de sortie d'une fraction du débit d'air formant le coussin d'air.

13) Dispositif selon la revendication 12, caractérisé en ce que ledit orifice central (22) est relié à des moyens (26) d'aspiration d'air.

14) Dispositif selon l'une des revendications 10 à 12, caractérisé en ce que la paroi (12) est supportée par des moyens mécaniques (36) extérieurs à distance sensiblement constante de l'élément (10) et est associée à un capteur de proximité (38) permettant de contrôler cette distance.

15) Dispositif selon l'une des revendications 10 à 12, caractérisé en ce que ladite paroi (12) est associée à des moyens (40) d'appui local sur l'élément (10).

FIG.1

FIG.2

FIG.3

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| Y | GB-A-1 552 793 (BICC LTD) <br> * Figures; page 3, ligne 18 - page 5, ligne 2; revendication 5 * <br> --- | 1,3,4,8 ,10,14 | G 01 K 13/06 <br> G 01 K 1/16 |
| Y | US-A-3 400 587 (FRANCK) <br> * Figures; colonne 2, ligne 14 - colonne 4, ligne 14 * <br> --- | 1,3,4,8 ,10,14 | |
| A | GB-A-2 156 529 (SWISS ALUMINIUM LTD) <br> * Figure; résumé; page 1, ligne 102 - page 2, ligne 90 * <br> --- | 1,5 | |
| A | DE-A-3 233 863 (METALLGESELLSCHAFT AG) <br> * Figures; page 5, ligne 28 - page 7 * <br> --- | 1,5,12 | |
| D,A | US-A-4 501 504 (URMENYI et al.) <br> ----- | | |

DOMAINES TECHNIQUES
RECHERCHES (Int. Cl.4)

G 01 K 13/04
G 01 K 13/06
G 01 K 1/16

Le présent rapport a été établi pour toutes les revendications

| Lieu de la recherche | Date d'achèvement de la recherche | Examinateur |
|---|---|---|
| LA HAYE | 06-04-1989 | BATTESON A. |